# EUROPEAN PATENT APPLICATION

(11) **EP 4 400 728 A1**
(43) Date of publication of application: **17.07.2024**
(21) Application number: 23181104.3
(22) Date of filing: 22.06.2023
(51) Int. Cl.: F04D 29/66, F04D 29/053, G01M 1/36, F16F 15/22, F16F 15/36, F16F 15/32

(54) **A DEVICE FOR BALANCING OF SHAFT OF INDUSTRIAL FAN**

(30) Priority: 10.01.2023 PL 44344523
(71) Applicant: Vibroson Lodz Spolka z Ograniczona Odpowiedzialnoscia, 93-578 Lodz (PL)
(72) Inventor: PODSEDKOWSKI, Leszek, 90-451 Lodz (PL); WROBLEWSKI, Piotr, 91-083 Lodz (PL); ZAK, Pawel, 94-124 Lodz (PL); KRYGIER, Michal, 91-129 Lodz (PL); PODSEDKOWSKI, Maciej, 90-451 Lodz (PL); WROBEL, Grzegorz, 91-009 Lodz (PL)
(74) Representative: Belz, Anna

(57) **Abstract**

The subject of the invention is the construction of a device for balancing an industrial fan shaft with an increased rotational speed of up to 1500 rpm, enabling shortening the time of its balancing process. The device for balancing the shaft of an industrial fan consists of a two-piece inner ring (1) to be mounted on the balanced shaft and two identical, parallel balancing rings (2, 2') with balancing masses (3, 3') located on the inner ring (1) coaxially. Around the balancing rings (2, 2') there are two identical, coaxial stators (A, A'). The balancing rings (2 and 2') are connected to the inner ring (1) independently, in a movable way, through two drive units (4, 4') and have a drive disc (7) located perpendicularly to the common axis of the stators (A, A' ) and shifted relative to the middle planes of the stators (A, A'), and the upper surface of the drive disc (7) is spaced from the inner surfaces of the stators (A, A') by the air gap (14).

## Description

The subject of the invention is a device for balancing a shaft of an industrial fan, for use in the ventilation industry.

From the Polish description of the invention application PL439946A, a device for balancing an industrial fan shaft is known, consisting of a two-part inner ring to be mounted on the balanced shaft and two identical, parallel balancing rings with balancing masses located coaxially on the inner ring. The balancing rings are connected to the inner ring independently, in a movable way, through two drive units, and the phenomenon of eddy currents is used to drive them.

Known from the Polish description of the invention application PL443445A is the drive unit of the device for balancing rotating elements, consisting of two stators and a drive disc mounted on the worm shaft of the balancing ring of the device for balancing rotating elements. The axis of the drive disc is located perpendicularly to the axis of the stators and is shifted relative to the center planes of the stators. The drive disc consists of a uniform body made of a material with a high magnetic permeability coefficient and a spoke cap attached to it from above.

US5676025A discloses a device for balancing a rotating member that can be used to compensate for unbalances on rotating elements that must be balanced during operation and at high rotational speeds, such as, for example, machine tool spindles that support unbalanced workpieces or impellers of fluid-flow machines, such as pumps or fans, to which dirt and similar contaminants can adhere, causing them to become unbalanced. The device has first and second annular balancing weights in the form of an inner inertia ring or balancing ring and an outer inertial ring or balancing ring. Both balancing rings are placed concentrically to the axis of rotation, in a plane perpendicular to the axis of rotation. The balance rings have ground inserts and have a plurality of holes that run parallel to the axis of rotation of the pivot member and are spaced around the periphery of the respective rings. In the recesses of the main part of the body located symmetrically to each other, there are mechanisms for displacing the balancing rings. The mechanisms for moving the balancing rings have a drive motor, which is connected to the worm gear through the drive shaft and toothed discs. The components of the balancing ring displacement mechanism are mounted on a support housing which is attached to the annular plate.

A device for dynamic balancing of rotating assemblies is known from Chinese patent application CN108956015A, which includes a base, a first balance plate and a second balance plate, an electromagnet, a driving device, an electromagnetic brake and a locking device. Both the first balance plate and the second balance plate have an unbalance, and both balance plates can independently rotate relative to the base.

There is a known device for dynamic balancing of rotating elements during the operation of the machine from the Polish patent description PL206661B1, having two discs with eccentric correction masses, bearing on the shaft of the balanced element and in which each of the discs is connected through a self-locking gear with the rotor of the motor rotating together with the driven shaft by the power supply unit from the control system, characterized in that each of the motors angularly deflecting the correction masses is a stepper electric motor controlled from the power supply unit containing ring transformers, each of which with its secondary winding is mounted on the shaft of the balanced element, and with the primary winding fixed motionless and connected to control system, where the number of ring transformers corresponds to the number of phases of the stepper electric motor.

The purpose of the invention is to develop a construction of a device for balancing the shaft of an industrial fan with an increased rotational speed of up to 1500 rpm, enabling the shortening of the balancing process of fans installed in production halls.

The essence of the device for balancing the shaft of an industrial fan, consisting of an inner ring to be mounted on the balanced shaft and two parallel balancing rings with balancing masses connected independently in a movable manner with the inner ring, which are located coaxially with it, and two drive units for the angular balancing rings, where each has a drive plate mounted on the worm shaft of the worm gear and gear wheels, and around the balance rings there are two stators for generating an electromagnetic field fixed to the foundations of the industrial fan for the rotation of the drive plates, is that the inner ring has two toothed rims offset symmetrically from its faces, the inner ring being bipartite. Each of the equal balancing rings is at least bipartite, and its balancing mass is a protrusion with the outline of a segment of a circular ring located within its outer periphery. Each of the drive units has a drive plate mounted on the worm shaft with an axis parallel to the base plane of the balancing ring, located at the entrance of the worm gear, the worm wheel of which is mounted on the hub of the toothed wheel, which is mounted on a fixed shaft fixed to the balancing ring. The worm shaft is mounted in the socket of the balancing ring protrusion located on the arcuate portion of the protrusion. The angular distance β between the rotation axes of the drive discs is over 60°. The axis of the drive disc is perpendicular to the common axis of the same stators and runs symmetrically between the middle planes of the stators, and the upper surface of the drive disc is spaced from the inner surfaces of the stators by an air gap. The drive disc consists of a uniform body and a spoke cap attached to it from above, the upper surface of the drive disc being spherical, the radius R of which corresponds to the radius r of the inner diameters of the stator rings, minus the air gap.

Preferably the body of the drive disk is made of a material with a high relative magnetic permeability.

Preferably the spoke cap is made of copper.

The device according to the invention, thanks to the use of a two-part inner ring and a two-part balancing ring, enables balancing the shaft without the need to dismantle it from its place of installation, and the set used in it for driving the balancing rings, consisting of two stators and a drive disc with a double-layer structure, allows increasing the torque of the drive disc to 1500 rpm, because the body of the drive disc attracts a greater part of the magnetic flux to the drive disc, and the spoke cap used in the drive disc, which closes the magnetic circuit through the spokes, allows change the magnetic field into the driving torque of the drive disc, which shortens the balancing time four times compared to for known drive discs.

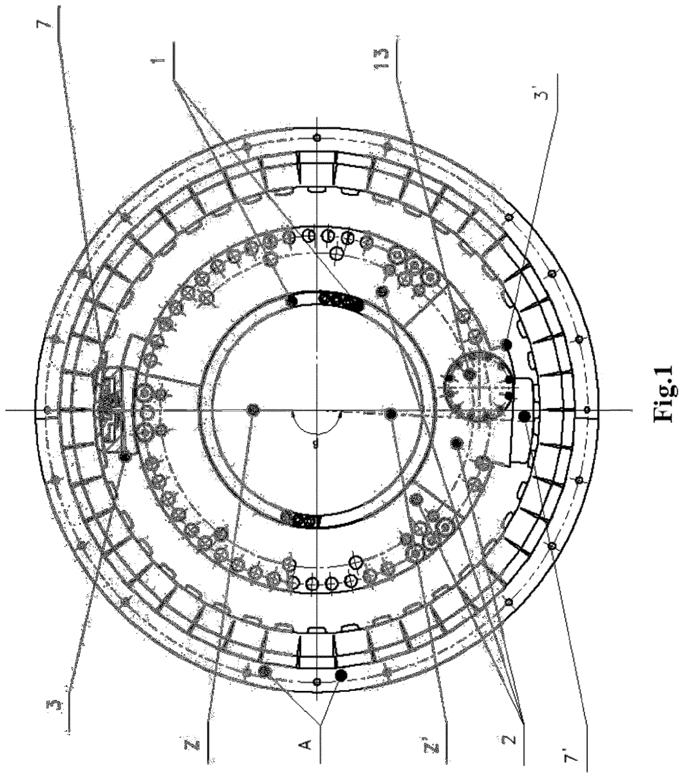

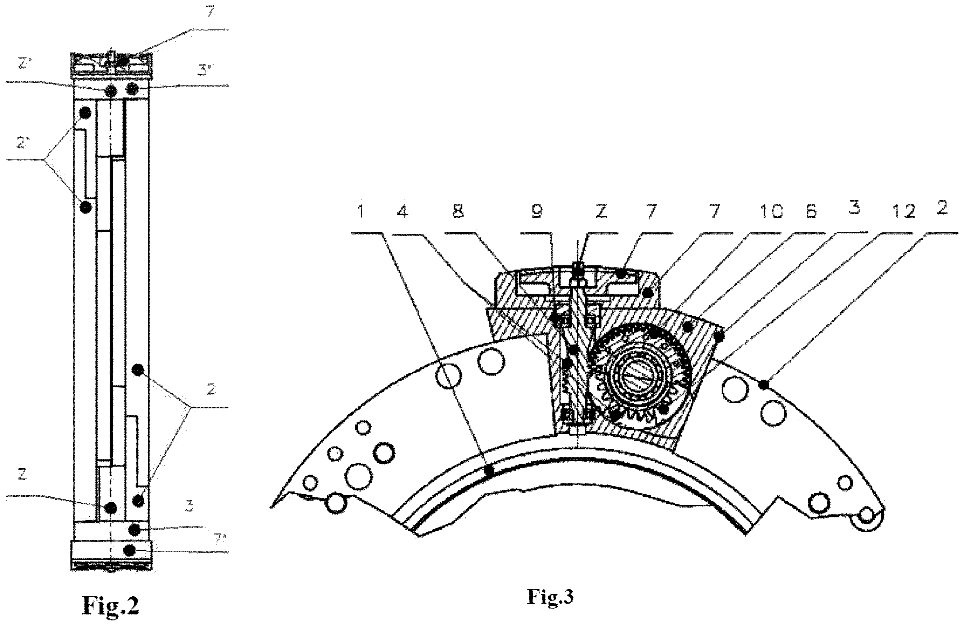

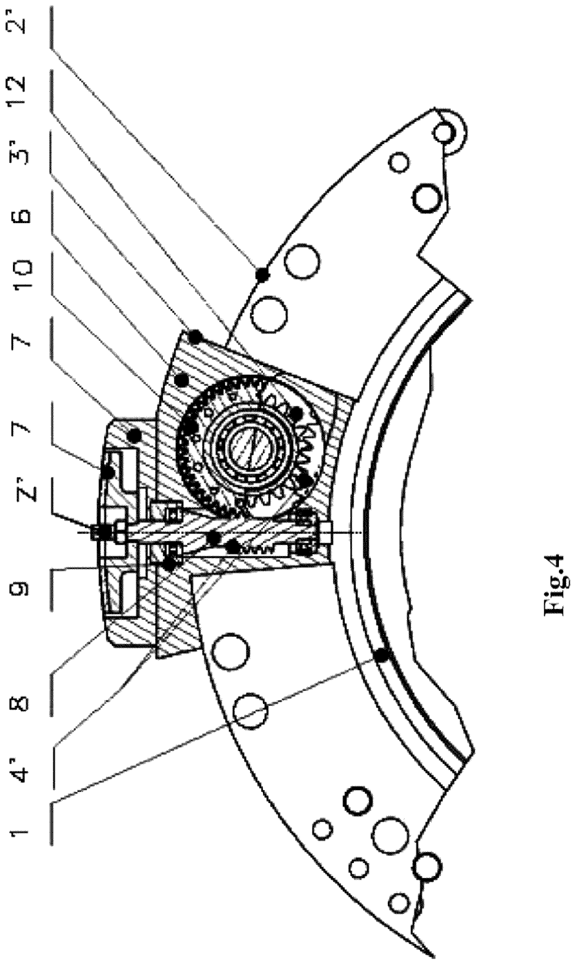

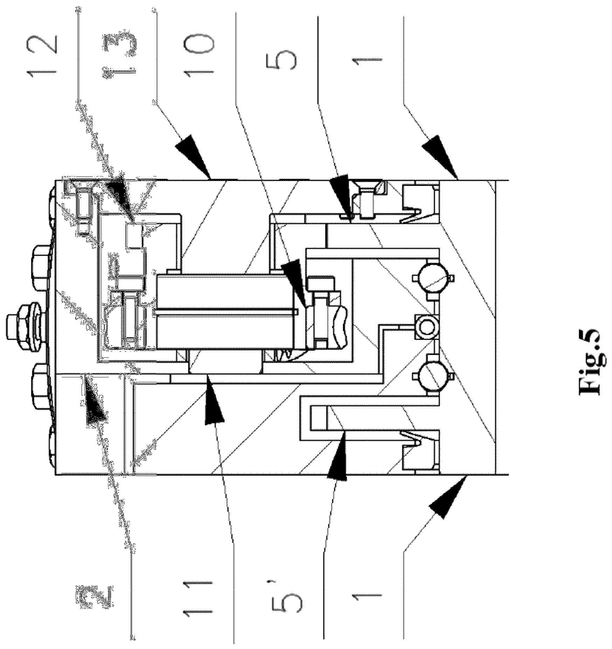

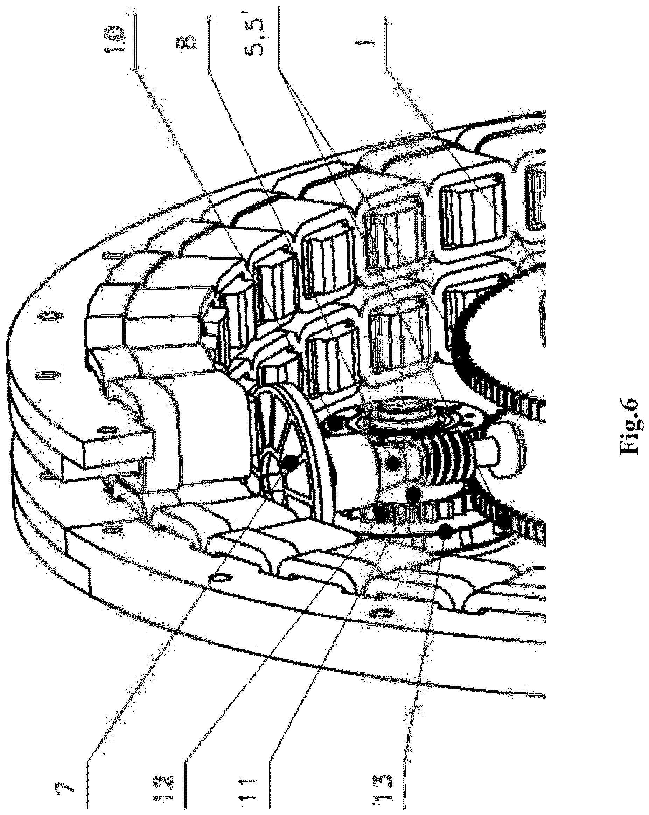

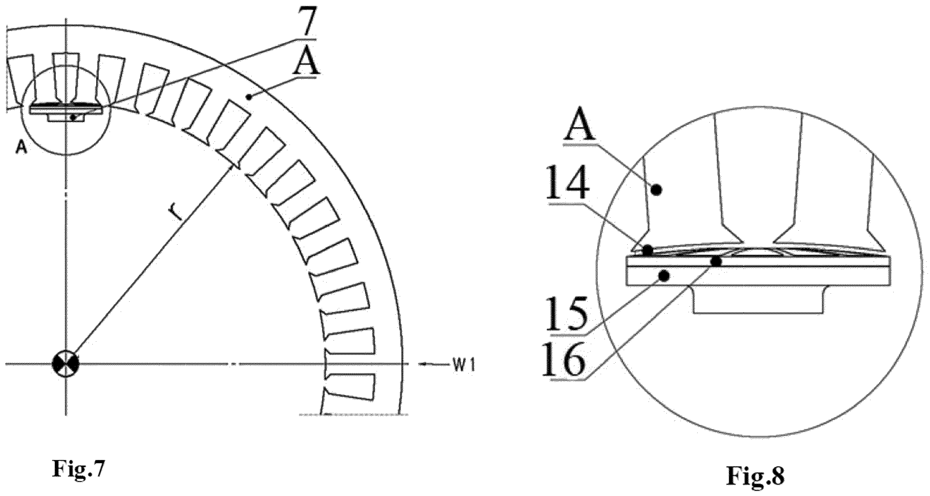

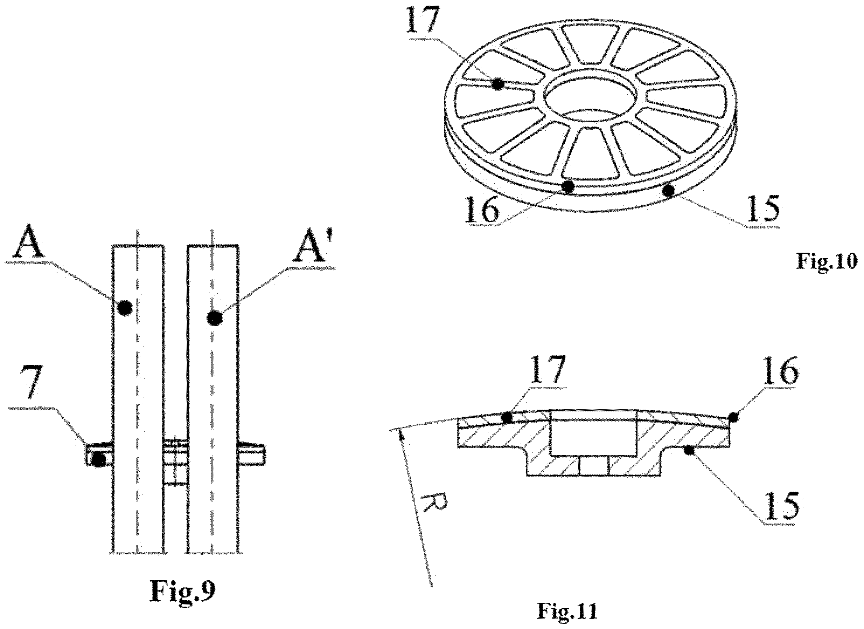

The subject of the invention is shown in an embodiment in the drawing, in which Fig. 1 shows the device for balancing the shaft of an industrial fan in a front view, Fig. 2 - a device without stators in a side view, Fig. 3 - a section of the device's balancing ring in a longitudinal section , fig.4 - section of the second balancing ring of the device in a longitudinal section, fig.5 - diagram of the drive transmission system in the device for balancing the fan shaft, fig.6 - schematic view of the drive unit in an axonometric view, fig. 7 - schematic fragment of the stator with the drive disc in front view , fig.8 - detail of the positioning of the drive disc in relation to the stator ring in the front view, fig.9 - schematic positioning of the drive disc in relation to the stators in a side view, fig.10 - the drive disc in an axonometric view, and fig.11 - drive plate in cross section.

The device for balancing the shaft of an industrial fan consists of a two-piece inner ring 1, to be mounted on the balanced shaft, and two identical, parallel balancing rings 2, 2' with balancing masses 3, 3' located coaxially on the inner ring 1. Around the balancing rings 2, 2', there are two coaxial stators A, A' with the same radius r of their inner diameters of the rings, attached to the foundations of an industrial fan, not shown in the drawing, used to generate an electromagnetic field. The balancing rings 2 and 2' are connected to the inner ring 1 independently, in a movable way, through two drive units 4, 4', and the phenomenon of eddy current generation is used to drive them. The inner ring 1 has two toothed rims 5 and 5' symmetrically offset from its faces.

Each of the balancing rings 2, 2' is bipartite, and its balancing mass 3, 3' is a protrusion 6 with the shape of a segment of a circular ring located within its outer periphery. Each of the drive units 4, 4' has a drive disc 7 rotatably placed inside two coaxial stators A, A', which rotates in two directions due to the effect of eddy currents on the magnetic field. The drive disc 7 of each drive unit 4, 4' is mounted on the worm shaft 8 of the worm gear with an axis parallel to the radius of the balancing ring 2, 2' and is located at the input of the worm gear. The axes of rotation of the worm shafts 8 of the worm gears are the axes of rotation Z, Z'. The worm shaft 8 is fixed in the socket 9 of the protrusion 6 of the balancing ring 2, 2' located on the arcuate part of the protrusion 6. The worm gear 10 is mounted on the hub 11 of the toothed wheel 12, which is rotatably mounted on the stationary fixing shaft 13 fixed to the balancing ring 2, 2', and the toothed wheel 12 is connected to the toothed rim 5 of the inner ring 1.

The axis of the drive disc 7 is perpendicular to the common axis of the stators A, A' and runs symmetrically between the mid-planes of the stators A, A'. The upper surface of the drive disc 7 is spaced from the inner surfaces of the stator rings A, A' by the air gap 14. The drive disc 7 consists of a uniform body 15 and a spoke cap 16 attached to it from above. The upper surface of the drive disc 7 is spherical, the radius R of which corresponds to the radius r of the inner diameters of the stator rings A, A' minus the air gap 14. The drive disc 7 consists of a unitary body 15 made of Somaloy powder material with a high coefficient of relative magnetic permeability and a spoke cap 16 made of copper, a highly conductive material, whose spokes 17 complete the magnetic circuit. The upper surface of the drive disc 7 is spherical, the radius R of which corresponds to the radius r of the inner diameter of the stator rings A, A' minus the air gap 14.

After the vibration sensors detect the unbalance of the shaft, an algorithm developed for this purpose calculates the value and angular position of the force that must be applied as a counterweight in order to balance the shaft. The rotation of the balancing rings is carried out by applying voltage to the stators fixed to the fan's foundation, located around the balancing rings. The generated magnetic field causes the rotation of the drive disc in each of the balancing rings, thanks to which the drive units cause the appropriate angular setting of the balancing rings in relation to the balanced shaft. The angular distance β between the axes of rotation Z, Z' of the drive discs is over 60°. At the angle β less than 60°, the drive discs of both drive units are in the same area of influence of the stator winding section, so the device will not work.

## Claims

1. A device for balancing the shaft of an industrial fan, consisting of an inner ring to be mounted on the balanced shaft and two parallel balancing rings with balancing masses connected independently in a movable way to the inner ring, which are located coaxially with it, and two drive units for angular displacement of the balancing rings, where each has a drive disc mounted on the worm shaft of the worm gear and gear wheels, and around the balancing rings there are two stators to generate the electromagnetic field attached to the foundations of the industrial fan for rotation of the drive discs, **characterized in that** the inner ring (1) has two toothed rims (5, 5') offset symmetrically from its faces, the inner ring (1) being bipartite, and each of the equal balancing rings (2, 2') being at least bipartite, and its balancing mass (3, 3') is a protrusion (6) with the shape of a section of a circular ring located within its outer circumference, while each of the drive units (4, 4') has a drive plate (7) mounted on the worm shaft (8) with an axis parallel to the base plane of the balancing ring (2, 2'), located at the entrance of the worm gear, the worm wheel (10) of which is mounted on the hub (11) of the toothed wheel (12), which is rotatably mounted on a fixed mounting shaft (13) attached to the balancing ring (2, 2'), wherein the worm shaft (8) is mounted in the socket (9) of the protrusion (6) of the balancing ring (2, 2') located on the arcuate part of the protrusion (6), and the angular distance β between the axes of rotation (Z, Z') of the drive discs (7) is above 60°, while the axis of the drive disc (7) is perpendicular to the common axis of the same stators (A, A') and runs symmetrically between the middle planes of the stators (A, A') and the upper surface of the drive disc (7) is spaced from the inner surfaces of the stators (A, A') by an air gap (14), while the drive disc (7) consists of a uniform body (15) and a spoke cap (16) attached to it from above, wherein the upper surface of the drive disc (7) being spherical, the radius R of which corresponds to the radius r of the inner diameters of the stator rings (A,A') minus the air gap (14).

2. The device according to claim 1, **characterized in that** the body (15) of the driving disc (7) is made of a material with a high coefficient of relative magnetic permeability.

3. The device according to claim 1, **characterized in that** the spoke cap (16) is made of copper.

## Amended claims

### Amended claims in accordance with Rule 137(2) EPC.

1. A device for balancing a shaft of an industrial fan, consisting of an inner ring (1) to be mounted on a balanced shaft and two parallel balancing rings with balancing masses connected independently in a movable way to the inner ring (1), which are located coaxially with said inner ring, and a worm gear comprising of worm shaft (8) and worm wheel (12), and around the balancing rings there are two stators to generate an electromagnetic field attachable to foundations of the industrial fan for rotation of the drive discs, where the inner ring (1) has two toothed rims (5, 5') offset symmetrically from its faces, the inner ring (1) being bipartite, and each of equal balancing rings (2, 2') being at least bipartite, and its balancing mass (3, 3') is a protrusion (6) with a shape of a section of a circular ring located within its outer circumference, while each drive unit (4, 4') has a drive disc (7) mounted on the worm shaft (8) with an axis parallel to the base plane of the balancing ring (2, 2'), located at the entrance of the worm gear, a worm wheel (10) of which is mounted on a hub (11) of a toothed wheel (12), which is rotatably mounted on a fixed mounting shaft (13) attached to the balancing ring (2, 2'), wherein the worm shaft (8) is mounted in a socket (9) of a protrusion (6) of the balancing ring (2, 2') located on the arcuate part of the protrusion (6), and the angular distance 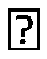 between the axes of rotation (Z, Z') of the drive discs (7) is above 60°, while the axis of the drive disc (7) is perpendicular to the common axis of the same stators (A, A') and runs symmetrically between the middle planes of the stators (A, A') and the upper surface of the drive disc (7) is spaced from the inner surfaces of the stators (A, A') by an air gap (14), while the drive disc (7) consists of a uniform body (15) and a spoke cap (16) attached to it from above, wherein the upper surface of the drive disc (7) being spherical, the radius R of which corresponds to the radius r of the inner diameters of the stator rings (A,A') minus the air gap (14).
